# EUROPEAN PATENT APPLICATION

(11) **EP 4 668 727 A1**
(43) Date of publication of application: **24.12.2025**
(21) Application number: 25182223.5
(22) Date of filing: 12.06.2025
(51) Int. Cl.: H04M 3/51, H04M 3/38

(54) **METHODS, APPARATUS AND COMPUTER PROGRAMS**

(30) Priority: 19.06.2024 FI 20245785
(71) Applicant: Nokia Solutions and Networks Oy, 02610 Espoo (FI)
(72) Inventor: AVASARALA, Ranjit, Buffalo Grove (US); HSU, Kang-Che, Woodinville (US); HOWSER, Stephen, Boulder (US)
(74) Representative: Nokia EPO representatives

(57) **Abstract**

Receiving one or more requests for an emergency call, the request comprising information about one or more identities such as caller identifier or device identifier; checking the validity of identities; sending, when one or more of the identities is invalid, the respective request for the emergency call to a PSAP with information that one or more of the identities is invalid. The PSAP may reject the call based on the validity information.

## Description

### TECHNICAL FIELD

Various example embodiments of this disclosure relate to methods, apparatus, system and computer programs and in particular, but not exclusively, methods, apparatus, system and computer programs relating to emergency calls.

### BACKGROUND

A communication network can be seen as a facility that enables communications between two or more communication devices or provides communication devices access to a data network. A mobile or wireless communication network is one example of a communication network. A communication device may be provided with a service by an application server.

Such communication networks support the making of emergency calls.

### SUMMARY

Some example embodiments of this disclosure will be described with respect to certain aspects. These aspects are not intended to indicate key or essential features of the embodiments of this disclosure, nor are they intended to be used to limit the scope of thereof. Other features, aspects, and elements will be readily apparent to a person skilled in the art in view of this disclosure.

According to a first aspect, there is provided an apparatus comprising: means for receiving one or more requests for an emergency call, a request for an emergency call comprising information about one or more identities; means for checking a validity of one or more of the one or more identities; and means for sending, when one or more of the identities is invalid, the respective request for the emergency call with information that one or more of the identities is invalid.

Some embodiments may be seen from the dependent claims.

According to a second aspect, there is provided a method comprising: receiving one or more requests for an emergency call, a request for an emergency call comprising information about one or more identities; checking a validity of one or more of the one or more identities; and sending, when one or more of the identities is invalid, the respective request for the emergency call with information that one or more of the identities is invalid.

The one or more identities may comprise one or more of a caller identity or a device identity.

The one or more identities may comprise one or more of an international mobile subscriber identity or an international mobile equipment identity.

The method may comprise checking the validity of one or more of the one or more identities by looking up one or more identities in a database.

The method may comprise determining that a respective identity is invalid if the database indicates that the respective identity is invalid.

The method may comprise determining that a respective identity is invalid if the respective identity is not found in the database.

The method may comprise retrieving from the database a predefined value when a respective identity is invalid.

The information that one or more of the identities is invalid may comprise one or more of: an identifier indicating that one or more of the identities is invalid; or a predefined value replacing at least a part of the respective identity.

The predefined value may comprise all zeros.

The method may comprise obtaining location information associated with a respective emergency call, when one or more of the identities of the respective emergency call is valid.

The request for an emergency call may comprise a session initiation protocol invitation.

The method may comprise sending the respective request for the emergency call to a public safety answering point.

The method may be performed by an apparatus.

The apparatus may provide an emergency call session function.

The apparatus may comprise at least one processor; and at least one memory storing instructions that, when executed by the at least one processor, cause the apparatus at least to provide one or more of the methods of the second aspect.

According to a third aspect, there is provided an apparatus comprising: means for receiving a request for an emergency call with information that one or more of identities associated with the request for the emergency call are invalid; and means for rejecting the request for the emergency call in dependence on the information that one or more of the identities associated with the request for the emergency call are invalid.

Some embodiments may be seen from the dependent claims.

The respective request for the emergency call may be received from an emergency call session function.

According to a fourth aspect, there is provided a method comprising: receiving a request for an emergency call with information that one or more of identities associated with the request for the emergency call are invalid; and rejecting the request for the emergency call in dependence on the information that one or more of the identities associated with the request for the emergency call are invalid.

The information that one or more of the identities is invalid may comprise one or more of: an identifier indicating that one or more of the identities is invalid; or a predefined value.

The predefined value may comprise all zeros.

The request for an emergency call may comprise a session initiation protocol invitation.

The respective request for the emergency call may be received from an emergency call session function.

The method may be performed by an apparatus.

The apparatus may provide a public safety answering point.

The apparatus may comprise at least one processor and at least one memory storing instructions that, when executed by the at least one processor, cause the apparatus at least to perform any of the methods of the fourth aspect.

According to another aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### DESCRIPTION OF FIGURES

Some example embodiments will now be described, by way of non-limiting and illustrative example only, with reference to the accompanying Figures in which:
Figure 1 shows a schematic diagram of parts of an example communication system of some embodiments;
Figure 2 shows a schematic diagram of an example apparatus;
Figure 3 shows a current emergency call procedure;
Figure 4 shows an emergency call flow of some embodiments;
Figure 5 shows a first method of some embodiments; and
Figure 6 shows a second method of some embodiments.

### DETAILED DESCRIPTION

Some examples may be provided in the context of emergency calls.

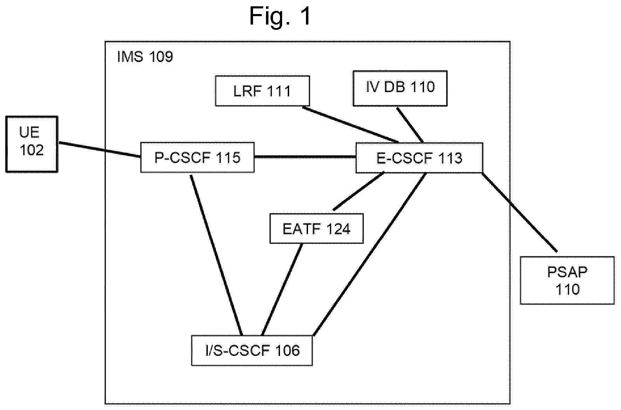

Figure 1 shows schematically an example system supporting emergency calls of some embodiments. As shown in Figure 1, the system may comprise at least one user equipment (UE) 102 and an IP Multimedia Subsystem (IMS) 109.

The UE communicates with a proxy of call session (or state) control function (P-CSCF) of the IMS 109. In practice, there will be other communication functions and entities between the P-CSF and the UE but for clarity, these are not shown.

An interrogating/serving CSCF (l/S- CSCF) 106 and an emergency CSCF (E-CSCF) 113 are provided in the IMS 109. The P-CSCF 115 provides the UEs with a gateway or entry point into the IMS 109. The l/S-CSCF 106, which may alternatively be separate components, operates as the authentication contact point within the core for connections to the UEs (the interrogating function), and performs the session control services for the UEs, providing the call intelligence and business logic (the serving function).

The E-CSCF 113 performs emergency session processing and routing and may employ a location retrieval function (LRF) 111 in the IMS 109 to retrieve location information of the UE 102 that has initiated an emergency session. This information may include, for example, routing information and other parameters necessary for emergency services, which may be subject to local regulation.

The E-CSCF handles the emergency call requests and elects an emergency service centre or public safety answering point (PSAP) 110, outside the IMS 109, based on the location of the caller. In devices with a SIM (Subscriber Identity Module), the device identification is based on the SIM identity for example IMSI (International Mobile Subscriber Identity) and phone number associated with the SIM i.e. MSISDN (Mobile Station International Subscriber Directory Number).

IMSI is a 15-digit value with first 2-3 digits comprising the mobile country code MCC code, then next 2-3 digits comprising the mobile network cod MNC code and remaining digits comprising the mobile subscription identification number MSIN. Length of MNC depends on length of MCC.

But in devices without SIM, the device identifier for example, IMEI (International Mobile Equipment Identity) is the only identifier.

An emergency access transfer function (EATF) is provided in the IMS 109 to provide IMS emergency continuity to enable access transfer between packet-switched and circuit-switched networks.

The E-CSCF or the EATF uses the IMEI to anchor the call and attempts to retrieve UE information using the IMEI.

The E-CSCF/EATF sends the contents of P-Asserted-Identity or UE identification i.e. IMEI to LRF which would try to retrieve information about UE using the IMEI.
These networks and components may cooperate to enable support for an emergency call session with a public safety answering point (PSAP) 110.

The IMS 109 may further include an application server referred to as a domain transfer function (DTF) or service centralization and continuity application server (SCC AS) 119, to which IMS sessions may be anchored to enable service continuity for the user during transition between two access networks. A similar anchoring function in IMS emergency sessions may be provided by an emergency access transfer function (EATF) 124.

In some examples the IMS 109 may also comprise an access transfer control function (ATCF) 117.

An identity validity database IVDB 110 may be provided. The E-CSCF 113 has access to this database. The IVDB 110 may be provided as part of the E-CSCF 113, as a stand-alone database, and/or as part of another database. The IVDB may be a database of valid and invalid identities which can be used to validate or invalidate an identity in a request for an emergency call. The IVDB will be described in more detail later.

In some embodiments the IVDB function may be provided by a EIR (equipment identity register). The E-CSF may have a device query interface component in order to query the IVDB function. This may be over a HTTP/LDAP interface. The device query interface takes care of performing device and subscriber query over the HTTP interface in order to determine in the given IMSI or IMEI is valid or not.

For IMSI validations, a check may be made to see if there is an active or inactive subscriber for the given IMSI. If there is an active subscriber, then current MSISDN and IMEI of the current device may be returned. If the subscriber is inactive, then the database query may return "inactive subscriber" and the IMEI may be changed to all zeros.

For IMEI validations, a check may be made to see if the IMEI is valid or invalid. If there is a valid IMEI, then a check is made to see if there any there is any active subscriber associated with this IMEI. If there is no active subscriber, then "inactive subscriber" may be returned. This may be a bot. If the IMEI is invalid, then there is no need to check for subscriber validity and "invalid IMEI" may be returned.

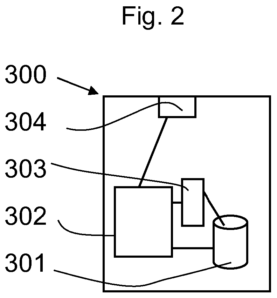

Figure 2 shows an example of an apparatus 300.

The apparatus may be or provide an emergency call session function.

The apparatus may be or provide a public safety answering point.

The apparatus 300 may have at least one processor and at least one memory storing instructions that, when executed by at least one of the at least one processor cause operations or actions of at least a part of the emergency call session function or the public safety answering point to be provided.

The apparatus 300 comprises at least one memory 301 and at least one processor, for example a data processing unit 302, 303. The apparatus comprises a network interface 304. The at least one processor 302 and 303 may comprise one or more CPUs (computer processing units) 302. The at least one processor may comprise a hardware accelerator 303.The memory 301 stores instructions which when executed by the at least one processor 302, 303, cause the emergency call session function or the public safety answering point to provide one or more of the described aspects.

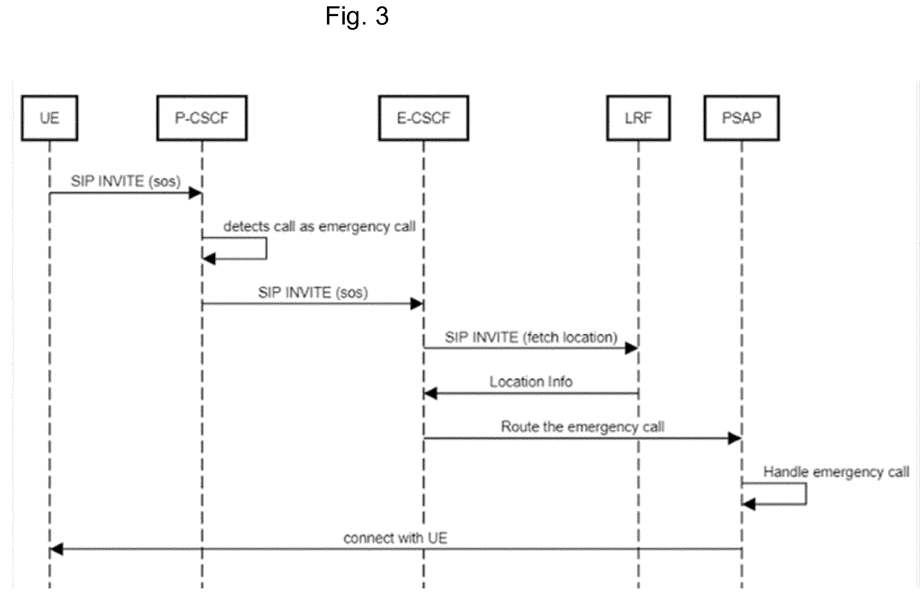

Reference is made to Figure 3, which shows a current emergency call flow.

As referenced 1, a UE sends a session initiation protocol invitation, SIP INVITE, for an emergency call to the P-CSCF. This may be triggered by for example the user dialling an emergency number such as 911 in the US or selecting an emergency call. This may comprise the subscriber identity and the device identity.

As referenced 2, the P-CSCF receives the SIP INVITE and determines that the call is an emergency call.

As referenced 3, the P-CSCF sends the SIP INVITE, for the emergency call to the E-CSCF. This may comprise the subscriber identity and the device identity.

As referenced 4, the E-CSCF sends the SIP INVITE, for the emergency call to the LRF to fetch the location of the UE. This may be based on the subscriber identity if available or the device identity. Emergency calls may be made even where the UE is not a subscriber of the operator of the network and those cases, the device identity may be used to determine where possible the location of the UE.

As referenced 5, the LRF provides the location information of the UE to the E-CSCF.

As referenced 6, the E-CSCF selects a PSAP and routes the emergency call with the location information to that selected PSAP. The emergency call is routed to a particular PSAP based on the location associated with the UE. Where no valid PSAP is associated with the retrieved location or there is no available location, the emergency call is forwarded to a default PSAP.

As referenced 7, the PSAP handles the emergency call.

As referenced 8, the PSAP connects with the UE. For example, the user of the UE is able to talk to an emergency operator.

However, the emergency call system may be bombarded by emergency calls from malicious attackers or botnets using, for example spoofed identities. The location information retrieved for the calls associated the malicious attackers or botnets may be such that the E-CSCF will select the default PSAP. Thus a large number of the malicious calls are routed to default PSAP. This may lead to the default PSAP being overwhelmed and genuine callers not being able to get through.

In some embodiments, the E-CSCF and/or EATF may validate the IMSI and/or IMEI in an emergency call request, for example, a SIP INVITE. Only if the IMSI and/or IMEI is determined as valid, is that identity sent as a valid identity to one or more of the EATF, the LRF, and/or PSAP.

The E-CSCF may retrieve the IMSI and/or IMEI from the SIP INVITE.

While validating the IMSI, if the response from the IVDB is "inactive subscriber" or "IMSI not found", then E-CSCF may determine that the caller may be a Bot or Fake. The E-CSCF may put all 0s for the IMSI and the IMEI. The E-CSCF may forward the call to the default PSAP. The E-CSCF may provide the comment - "Invalid identifier".

While validating the IMEI, the E-CSCF should first check if the IMEI is valid. If the IMEI is invalid, then E-CSCF may put all 0s in IMEI field of SIP INVITE and send SIP INVITE to the EATF/LRF.

If the IMSI/IMEI is determined as invalid or corrupt, the E-CSCF and/or EATF may remove the invalid identities from SIP INVITE. The E-CSCF and/or EATF may forward the call to a designed PSAP. The E-CSCF and/or EATF may forward the call to an announcement server. The E-CSCF and/or EATF may reject the call based on operator's policy.

The EATF may not attempt to anchor the call if there is no IMEI in SIP INVITE, in a SIM-less call.

The LRF and/or PSAP may not attempt to retrieve the location of the device if the identities are not present or are indicated as invalid. Such a call may be routed to a designated PSAP. Such a call may be routed to an announcement server. Such a call may be discarded. The reason of the discarding the call may be provided. For example, the reason may indicate the call comprises invalid information. In some embodiments, the call with the invalid identifiers may be given a lower priority. The priority of the call may be determined by a value set in the resource priority header RPH and/or attestation-information header. This may be based on the policy of the operator of the communications network.

The PSAP may use the information in the RPH and/or attestation-information header to determine the treatment of the emergency call, for example, that the call is to be discarded on the basis on one or more invalid identities.

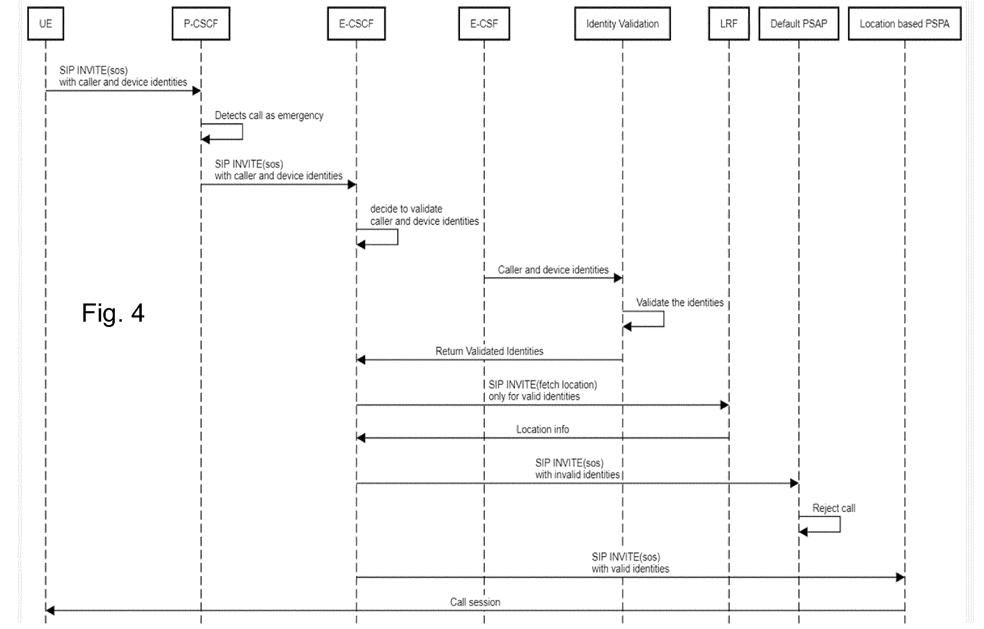

Reference is made to Figure 4, which shows an emergency call flow of some embodiments.

As referenced 1, a UE sends a session initiation protocol invitation, SIP INVITE, for an emergency call to the P-CSCF. This may be triggered by for example the user dialling an emergency number such as 911 in the US or selecting an emergency call. This comprises the subscriber identity, where available, and the device identity. The subscriber identity may be an international mobile subscriber identity (IMSI). One or more other subscriber identities may alternatively or additionally be used. The device identity may be an international mobile equipment identity (IMEI). One or more other device identities may alternatively or additionally be used.

As referenced 2, the P-CSCF receives the SIP INVITE and determines that the call is an emergency call.

As referenced 3, the P-CSCF sends the SIP INVITE, for the emergency call to the E-CSCF. This comprises the subscriber identity, where available, and the device identity.

As referenced 4, the E-CSCF validates the subscriber identity, where available, and the device identity. In some embodiments, the validation procedure comprises looking up the subscriber identity, where available, and/or the device identity in the identity validation database. In some embodiments, the validation procedure comprises looking up the device identity in the identity validation database only if the subscriber identity is not available. As mentioned, the identity validation database may be part of the E-CSCF, part of another database or provided as a stand-alone database.

As referenced 5, the result of identity validation is provided by the identity validation database. This may be, for example, the result of the look up.

For example, if the identity validation database returns the respective identity in response to the look up, then the E-CSCF may determine that the respective identity is valid.

The E-CSCF may determine that a respective identity is invalid if the identity validation database indicates that that the respective identity is invalid.

For example, the respective value may be determined to be invalid, if the identity validation database returns a predefined value in response to the look up. The predefined value may all zeros. The information returned by the identity validation database in response to the look up returns a value comprising only zeros.

For example, the respective value may be determined to be invalid, if the identity validation database returns an identifier in response to the look up. The identifier may indicate that the respective identity is invalid. The information returned by the identity validation database in response to the look up returns a value comprising the identifier of invalidity and optionally the respective identity.

The table below shows two examples of an entry in the identity validation database.

The first line has an entry which indicates the identity is invalid. The first entry further indicates that the identity is a spoofed identity.

The second first line has an entry which indicates the identity is valid. The first entry further indicates that the identity is a device identity.

| **Identity** | **Status** | **Additional info** |
|---|---|---|
| 1234567890012345 | Invalid | Spoofed |
| 2334567890929391 | Valid | Device id |

The E-CSCF may determine that a respective identity is invalid if the respective identity is not found in the identity validation database.

As referenced 6, the E-CSCF sends the SIP INVITE, for the emergency call to the LRF to fetch the location of the UE. This is only done if the respective identity has been validated. This may be based on the subscriber identity if available and/or or the device identity. Emergency calls may be made even where the UE is not a subscriber of the operator of the network and those cases, the device identity may be used to determine where possible the location of the UE.

It should be noted that in some embodiments, where both identities are checked for validity, both of the identities need to be valid for the E-CSCF to send the SIP INVITE, for the emergency call to the LRF. It should be noted that in other embodiments, where both identities are checked for validity, only one of the identities need to be valid for the E-CSCF to send the SIP INVITE, for the emergency call to the LRF.

As referenced 7, the LRF provides the location information of the UE to the E-CSCF. Where there is no indication that the identity is invalid, the LRF will use the identity to determine the location of the UE where possible.

In some embodiments, the E-CSCF sends the SIP INVITE, for the emergency call to the LRF to fetch the location of the UE even where one or more identities are invalid. In this example, the request sent to the LRF may comprise the defined value, e.g. all zeros. This means the LRF understands that the identity is not a valid identity and will return an indication which causes the E-CSCF to select a default PSAP for the serving SIP INVITEs with one or more invalid identities. The LRF may route such a call to an announcement server or reject the call based the policy of the operator of the network.

As referenced 8, the E-CSCF selects a PSAP and send the SIP INVITE to the PSAP.

For a call with a validated identity, the E-CSCF selects a PSAP based on the location information, where available. The emergency call is routed to a particular PSAP based on the location associated with the UE. This is the location based PSAP in Figure 4.

For a call with a validated identity, the E-CSCF selects a default PSAP where there is no location information.

For a call associated with one or more invalid identities, the E-CSCF may select a PSAP and send the SIP INVITE. The PSAP may be a default PSAP or a PSAP dedicated to handing emergency calls associated with invalid identities.

The SIP INVITE may comprise the one or more invalid identities. The SIP INVITE may have an indication that one or more identities are invalid. This may be provided by an identifier. Alternatively or additionally, a respective invalid identity may be replaced by a predefined value. The predefined value may be all zeros. The predefined value may be obtained from the look up to the identity validation database.

As referenced 9a, the default or other PSAP handles the emergency calls associated with the one or more invalidated identities may reject the call. This is based on the one or more invalid identities. The default PSAP will handle the emergency calls associated with one or more validated identities. (This is not shown in Figure 4).

As referenced 9b, the location based PSAP handles the emergency call as previously discussed.

As referenced 10, the location based PSAP connects with the UE. For example, the user of the UE is able to talk to an emergency operator.

In some embodiments, where the call is routed to the EATF, the EATF may operate in a similar manner as discussed in relation to the E-CSCF. The EATF may validate one or more of the subscriber identity, if present, and the device identity. This may be via the identity validation database. When one or more of the identities are invalid, the EATF may forward the call to the LRF with an indication that a respective identifier is invalid.

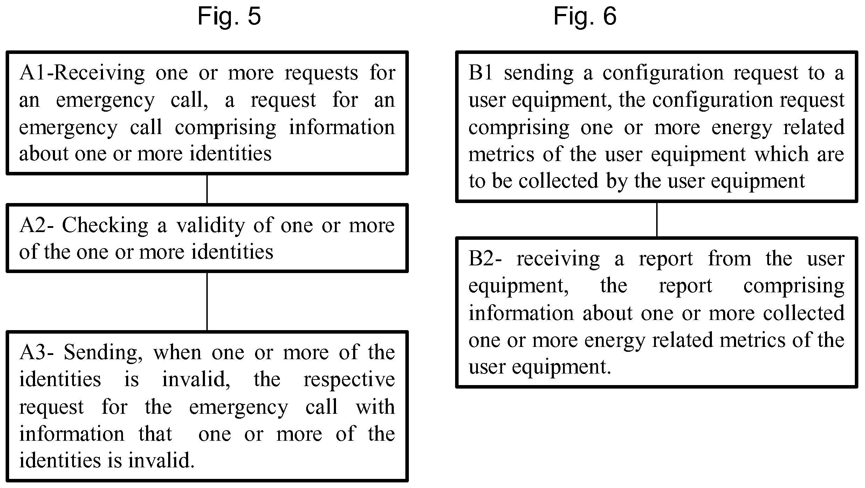

Reference is made to FIG.5 which shows a method of some example embodiments.

This method may be performed by an apparatus.

The apparatus may provide an emergency call session function.

The apparatus may comprise suitable means, such as circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to FIG. 2.

The method may be provided by computer program code or computer executable instructions.

The method may comprise as referenced A1, receiving one or more requests for an emergency call, a request for an emergency call comprising information about one or more identities.

The method may comprise as referenced A2, checking a validity of one or more of the one or more identities.

The method may comprise as referenced A3, sending, when one or more of the identities is invalid, the respective request for the emergency call with information that one or more of the identities is invalid.

The method may be modified to include further steps such as discussed previously.

Reference is made to FIG.6 which show a method of some example embodiments.

This method may be performed by an apparatus.

The apparatus may provide a public safety answering point.

The apparatus may comprise suitable means, such as circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to FIG. 2.

The method may be provided by computer program code or computer executable instructions.

The method may comprise as referenced B1, receiving a request for an emergency call with information that one or more of identities associated with the request for the emergency call are invalid.

The method may comprise as referenced B2, rejecting the request for the emergency call in dependence on the information that one or more of the identities associated with the request for the emergency call are invalid.

The method may be modified to include further steps such as discussed previously.

Validation of IMSI and IMEI at the E-CSCF may help prevent emergency calls from randomized and invalid IMSIs and IMEIs from overloading the emergency centres.

Monitoring the number of invalid IMSIs and IMEIs being created or used to create fake emergency calls may help determine attacks on the emergency services.

Real emergency callers may get the required attention as non real emergency calls can be filtered out.

Although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a communication device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the FIGs may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the accompanying drawings and the claims. However, all such and similar modifications of the teachings will still fall within the various example embodiments of the disclosure as set forth in the claims. By way of non-limiting and illustrative example, there is a further example embodiment comprising a combination of one or more example embodiments with any of the other example embodiments previously discussed.

## Claims

1. An apparatus comprising:
means for receiving (A1) one or more requests for an emergency call, a request for an emergency call comprising information about one or more identities;
means for checking (A2) a validity of one or more of the one or more identities; and
means for sending (A3), to a public safety answering point, PSAP, when one or more of the identities is invalid, the respective request for the emergency call with information that one or more of the identities is invalid.

2. The apparatus as claimed in claim 1, wherein the one or more identities comprise one or more of a caller identity or a device identity.

3. The apparatus as claimed in claim 2, wherein the one or more identities comprise one or more of an international mobile subscriber identity or an international mobile equipment identity.

4. The apparatus as claimed in any preceding claim, wherein the means for checking the validity of one or more of the one or more identities is for looking up one or more identities in a database.

5. The apparatus as claimed in claim 4, wherein the means for checking the validity of one or more of the one or more identities is for determining that a respective identity is invalid if the database indicates that the respective identity is invalid.

6. The apparatus as claimed in claim 4 or 5, wherein the means for checking the validity of one or more of the one or more identities is for determining that a respective identity is invalid if the respective identity is not found in the database.

7. The apparatus as claimed in any of claim 4 to 6, wherein the means for checking the validity of one or more of the one or more identities is for retrieving from the database a predefined value when a respective identity is invalid.

8. The apparatus as claimed in any preceding claim, wherein the information that one or more of the identities is invalid comprises one or more of:
an identifier indicating that one or more of the identities is invalid; or a predefined value replacing at least a part of the respective identity.

9. The apparatus as claimed in any preceding claim, comprising means for obtaining location information associated with a respective emergency call, when one or more of the identities of the respective emergency call is valid.

10. An apparatus comprising:
means for receiving a request for an emergency call with information that one or more of identities associated with the request for the emergency call are invalid; and
means for rejecting the request for the emergency call in dependence on the information that one or more of the identities associated with the request for the emergency call are invalid.

11. The apparatus as claimed in claim 10, wherein the information that one or more of the identities is invalid comprises:
an identifier indicating that one or more of the identities is invalid.

12. The apparatus as claimed in claim 11, wherein the predefined value comprises all zeros.

13. A method comprising:
receiving (A1) one or more requests for an emergency call, a request for an emergency call comprising information about one or more identities;
checking (A2) a validity of one or more of the one or more identities; and
sending (A3), to a public safety access point, PSAP, when one or more of the identities is invalid, the respective request for the emergency call with information that one or more of the identities is invalid.

14. A method comprising:
receiving a request for an emergency call with information that one or more of identities associated with the request for the emergency call are invalid; and
rejecting the request for the emergency call in dependence on the information that one or more of the identities associated with the request for the emergency call are invalid.

15. A computer program comprising computer executable instructions which when executed by at least one processor cause the method of claim 13 or 14 to be performed.
